**Europäisches Patentamt**

**European Patent Office**

**Office européen des brevets**

(11) Veröffentlichungsnummer: **0 157 726**
**B1**

(12) **EUROPÄISCHE PATENTSCHRIFT**

(45) Veröffentlichungstag der Patentschrift:
19.11.87

(51) Int. Cl.⁴: **G 01 L 13/02**, G 01 L 9/06

(21) Anmeldenummer: **85730031.3**

(22) Anmeldetag: **01.03.85**

(54) **Druck- oder Druckdifferenzmessgerät.**

(30) Priorität: **09.03.84 DE 8407659 U**

(43) Veröffentlichungstag der Anmeldung:
**09.10.85 Patentblatt 85/41**

(45) Bekanntmachung des Hinweises auf die Patenterteilung:
**19.11.87 Patentblatt 87/47**

(84) Benannte Vertragsstaaten:
**BE DE FR GB IT NL SE**

(56) Entgegenhaltungen:
**US - A - 3 047 022**
**US - A - 4 244 226**

(73) Patentinhaber: **Siemens Aktiengesellschaft Berlin und München, Wittelsbacherplatz 2, D-8000 München 2 (DE)**

(72) Erfinder: **Pehlgrim, Horst, Gorgasring 27 b, D-1000 Berlin 20 (DE)**
Erfinder: **von Rauch, Moriz, Kiefernweg 3, D-1000 Berlin 19 (DE)**

**Beschreibung**

Die Erfindung bezieht sich auf ein Druck- oder Druckdifferenzmessgerät mit einem an seinen Stirnseiten Membranen aufweisenden Zentralkörper, der eine Drucksensor-Einrichtung enthält.

Ein bekanntes Messgerät dieser Art (DE-OS 3 222 620) weist einen verhältnismässig einfachen Aufbau auf, weil es ohne eine verhältnismässig grosse Ausgleichskammer mit einer Ausgleichsmembran zum Überlastschutz auskommt; bei dem bekannten Messgerät ist nämlich in der Nähe jeder an einer Stirnseite des Zentralkörpers vorhandenen Trennmembran an dem Zentralkörper in drucküberttragender Verbindung mit der Trennmembran eine Zusatzmembran angebracht, die mit Vorspannung an dem Zentralkörper anliegt. Darüber hinaus ist über innere Kanäle die jeweils eine Trennmembran mit der der jeweils anderen Trennmembran benachbarten Zusatzmembran verbunden. Wie die Drucksensor-Einrichtung in dem Zentralkörper im einzelnen untergebracht ist, geht aus der Druckschrift nicht hervor.

Der Erfindung liegt die Aufgabe zugrunde, ein Druck- oder Druckdifferenzmessgerät vorzuschlagen, bei dem sich die Drucksensor-Einrichtung in konstruktiv einfacher und fertigungstechnisch günstiger Weise in dem Zentralkörper anordnen lässt.

Zur Lösung dieser Aufgabe weist bei einem Druck- oder Druckdifferenzmessgerät der eingangs angegebenen Art der Zentralkörper im Umfangsbereich zwischen den Membranen eine topfartige Ausnehmung auf, und ein entsprechend bemessener Tragkörper der Drucksensor-Einrichtung ist in die Ausnehmung eingesetzt; der Tragkörper weist eine in einen druckübertragenden Kanal im Zentralkörper übergehende Querbohrung in einer derartigen Lage auf und ist an seinem äusseren Rande durch eine Schweissverbindung mit dem Zentralkörper derart verbunden, dass eine Abdichtung im Bereich der Übergangsstelle von Querbohrung und Kanal durch die Schweissverbindung entsteht.

Ein wesentlicher Vorteil des erfindungsgemässen Druck- oder Druckdifferenzmessgerätes besteht darin, dass bei ihm die Drucksensor-Einrichtung in einfacher Weise an dem Zentralkörper angebracht ist. Dies ist dadurch erreicht, dass durch die den Tragkörper der Drucksensor-Einrichtung mit dem Zentralkörper verbindende Schweissverbindung gleichzeitig im Bereich der Übergangsstelle zwischen der Querbohrung und dem druckübertragenden Kanal eine Abdichtung bewirkt ist. Damit ist am Umfang des Tragkörpers der Drucksensor-Einrichtung eine gute Abdichtung ohne zusätzliche Massnahmen erreicht, so dass eine unmittelbare Verbindung von der einen Seite des Drucksensors zur anderen Seite und nach aussen vermieden ist.

Durch diese Art der Abdichtung zwischen der Querbohrung des Tragkörpers und dem druckübertragenden Kanal des Zentralkörpers erübrigt es sich, den druckübertragenden Kanal aus dem Zentralkörper herausführen und die Drucksensor-Einrichtung aussen am Zentralkörper anbringen zu müssen, wie dies beispielsweise bei dem Differenzdruck-Messumformer nach der DE-OS 3 047 276 der Fall ist. Bei diesem bekannten Messumformer ist ausserdem eine verhältnismässig grosse Randbohrung im Tragkörper der Drucksensor-Einrichtung vorgesehen, um mittels eines eingeschweissten Dichtungsstückes eine Verbindung zur einen Seite des eigentlichen Drucksensors zu gewinnen. Das erfindungsgemässe Messgerät hat demzufolge auch den Vorteil, dass sein Zentralkörper verhältnismässig flach ausgeführt ist und daher einen geringen Raumbedarf hat.

Bei dem erfindungsgemässen Messgerät ist die Schweissverbindung vorteilhafterweise eine Elektronenstrahl-Schweissverbindung.

Zur Erläuterung der Erfindung ist in der

Fig. 1 ein Schnitt durch ein Ausführungsbeispiel des erfindungsgemässen Druck- oder Druckdifferenzmessgerätes quer zur Ebene der Membranen und in

Fig. 2 ein Schnitt senkrecht zur ersten Schnittebene durch dasselbe Ausführungsbeispiel wiedergegeben.

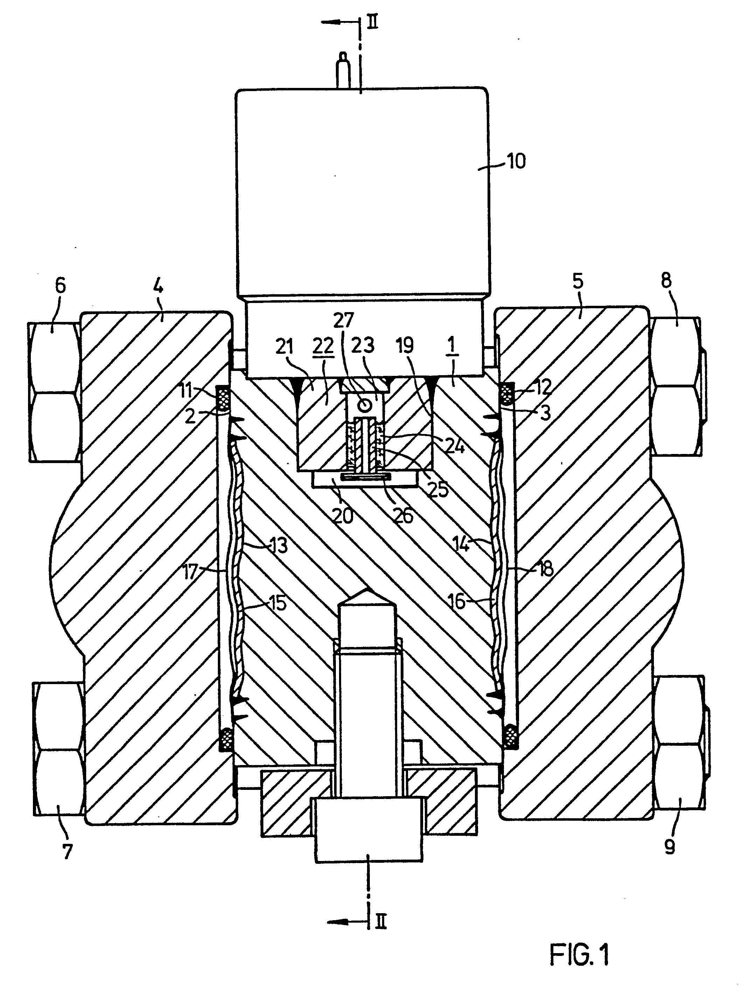

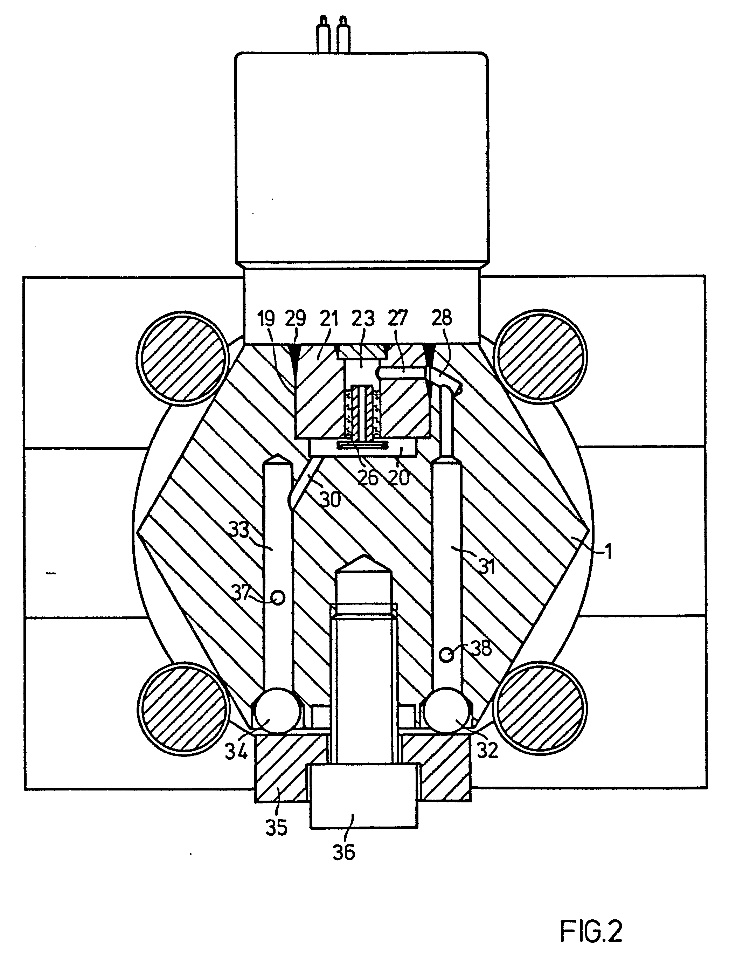

Das in den Fig. 1 und 2 dargestellte Ausführungsbeispiel eines Druck- oder Druckdifferenzmessgerätes weist einen Zentralkörper 1 auf, der an seinen beiden Stirnseiten 2 und 3 durch Gehäusekappen 4 und 5 abgedeckt ist. Über nicht sichtbare Öffnungen in den Gehäusekappen ist das Messgerät an das Medium angeschlossen, dessen Druck erfasst werden soll. Der Zentralkörper 1 und die Gehäusekappen 4 und 5 sind mittels Schraubbolzen 6 und 7 sowie Muttern 8 und 9 miteinander verspannt. Im Bereich zwischen den Gehäusekappen 4 und 5 in der Figur oberhalb des Zentralkörpers 1 befindet sich ein Gehäuse 10, in dem die elektronische Schaltung des Messgerätes oder Teile der Schaltung untergebracht sind; zur besseren Übersichtlichkeit ist in den Figuren das Gehäuse 10 nur in seinem äusseren Umriss wiedergegeben.

Wie insbesondere Fig. 1 erkennen lässt, sind die Gehäusekappen 4 und 5 über jeweils einen Dichtring 11 und 12 an den Zentralkörper 1 gepresst. Der Zentralkörper 1 ist an seinen beiden Stirnseiten 2 und 3 so ausgebildet, dass dort jeweils ein Membranbett 13 und 14 gebildet ist. Mit dem Zentralkörper 1 ist an den beiden Stirnseiten 2 und 3 jeweils eine Zusatzmembran 15 bzw. 16 verschweisst, wobei die Zusatzmembranen 15 und 16 jeweils eine derartige Vorspannung aufweisen, dass sie sich an das jeweilige Membranbett 13 bzw. 14 anpressen. Ebenfalls an den Stirnseiten 2 und 3 des Zentralkörpers 1 ist jeweils eine Trennmembran 17 und 18 angebracht. Die Zusatzmembranen 15 und 16 sind im Durchmesser kleiner ausgeführt als die Trennmembranen 17 und 18.

Der Zentralkörper 1 weist im Umfangsbereich zwischen den Membranen aussen eine topfartige Ausnehmung 19 auf, die in dem dargestellten Ausführungsbeispiel zum Innern des Zentralkörpers 1 hin eine weitere Ausnehmung 20 mit kleineren Abmessungen aufweist. In die topfartige Ausnehmung 19 ist ein Tragkörper 21 einer Drucksensor-Einrichtung 22 eingesetzt. Der Tragkörper 21 ist mit einer oben zugeschweissten Längsbohrung 23 versehen, in der mittels einer Glasschmelze 24 ein Röhrchen 25 gehalten ist. Dieses Röhrchen 25 steht etwas aus dem Tragkörper 21 nach unten aus der Längsbohrung 23 hervor. An dem hervorstehenden Ende des Röhrchens 25 ist ein Halbleiter-Sensor 26 angelötet, bei dem es sich um einen Halbleiter-Sensor mit bekanntem Aufbau handeln kann (vgl. z.B. DE-OS 2 617 731).

Wie insbesondere die Fig. 2 erkennen lässt, weist der Tragkörper 21 eine Querbohrung 27 auf, die sich von der Längsbohrung 23 bis zum Rande des Tragkörpers 21 erstreckt. Im eingesetzten Zustand mündet die Querbohrung 27 in einen druckübertragenden Kanal 28 im Zentralkörper 1.

Der Tragkörper 21 ist mittels einer Schweissverbindung 29 fest mit dem Zentralkörper 1 an seinem äusseren Rande verbunden. Dabei ist durch die Lage der Querbohrung 27 und die Ausführung der Schweissverbindung 29 dafür gesorgt, dass im Bereich der Übergangsstelle von der Querbohrung 27 zum druckübertragenden Kanal 28 eine Abdichtung um die Übergangsstelle herum unter Freilassung einer Durchgangsöffnung entsteht. Es kann daher nicht in unerwünschter Weise der Druck im druckübertragenden Kanal 28 an der zylindrischen Trennfuge zwischen dem Tragkörper 21 und dem Zentralkörper 1 entlang zu der Seite des Halbleiter-Sensors 26 gelangen, der in der weiteren Ausnehmung 20 liegt. In diese weitere Ausnehmung 20 mündet nämlich ein weiterer druckübertragender Kanal 30. Zur Erzielung der gewünschten Abdichtung mit freigelassener Durchgangsöffnung ist vor dem Schweissen die Querbohrung 27 am Rande des Tragkörpers 21 mit einer Senkung versehen, um einen Werkstoffüberschuss an der Übergangsstelle zu vermeiden.

Der druckübertragende Kanal 28 ist mit einem Verbindungskanal 31 verbunden, der über eine Kugeldichtung 32 nach aussen abgedichtet ist. Entsprechend ist der weitere druckübertragende Kanal 30 an einen weiteren Verbindungskanal 33 angeschlossen, der durch eine weitere Kugel 34 nach aussen abgedichtet ist, indem über ein Druckstück 35 und einen Gewindebolzen 36 die beiden Kugeln 32 und 34 gegen ihre Dichtstelle gepresst werden. Beide Verbindungskanäle 31 und 33 liegen in derselben Ebene, die eine Parallelebene zu den Stirnseiten 2 und 3 des Zentralkörpers 2 darstellt.

Von den in einer Ebene zwischen den Stirnseiten 2 und 3 des Zentralkörpers 1 liegenden Verbindungskanälen 31 und 33 gehen bei dem dargestellten Ausführungsbeispiel mit jeweils zwei Trennmembranen 17 und 18 und zwei Zusatzmembranen 15 und 16 jeweils zwei Kanäle ab, von denen in der Fig. 2 nur jeweils ein Kanal 37 bzw. 38 erkennbar ist. Von diesen Kanälen führt der Kanal 37 zur Zusatzmembran 15 und der Kanal 38 zur Trennmembran 17 auf ein und derselben Stirnseite 2 des Zentralkörpers 1. Ein weiterer nicht dargestellter Kanal führt von dem Verbindungskanal 31 zur Zusatzmembran 16 und ein zusätzlicher (ebenfalls nicht gezeigter) Kanal von dem weiteren Verbindungskanal 33 zur Trennmembran 18. Sämtliche Kanäle im Innern des Zentralkörpers 1 sowie die Querbohrung 27 und die weitere Ausnehmung 20 sind mit einer Druckübertragungsflüssigkeit gefüllt.

Abschliessend ist darauf hinzuweisen, dass die Erfindung keineswegs nur bei Druck- oder Druckdifferenzmessgeräten mit Trenn- und Zusatzmembran an jeder Stirnseite des Zentralkörpers einsetzbar ist, sondern auch mit Vorteil bei solchen Druck- oder Druckdifferenzmessgeräten anwendbar ist, die mit einer Ausgleichsmembran in einer Ausgleichskammer ausgerüstet sind, wie dies beispielsweise bei dem Gerät nach der DE-OS 3 047 276 oder bei der Einrichtung nach der DE-AS 2 657 933 der Fall ist.

**Patentansprüche**

1. Druck- oder Druckdifferenzmessgerät mit einem an seinen Stirnseiten Membranen aufweisenden Zentralkörper (1), der eine Drucksensor-Einrichtung (22) enthält, dadurch gekennzeichnet, dass der Zentralkörper (1) im Umfangsbereich zwischen den Membranen (15, 17; 16, 18) eine topfartige Ausnehmung (19) aufweist, dass ein entsprechend bemessener Tragkörper (21) der Drucksensor-Einrichtung (22) in die Ausnehmung (19) eingesetzt ist und dass der Tragkörper (21) eine in einen druckübertragenden Kanal (28) im Zentralkörper (1) übergehende Querbohrung (27) in einer derartigen Lage aufweist und an seinem äusseren Rande durch eine Schweissverbindung (29) mit dem Zentralkörper (1) derart verbunden ist, dass eine Abdichtung im Bereich der Übergangsstelle von Querbohrung (27) und druckübertragenden Kanal (28) durch die Schweissverbindung (29) entsteht.

2. Messgerät nach Anspruch 1, dadurch gekennzeichnet, dass die Schweissverbindung (29) eine Elektronenstrahl-Schweissverbindung ist.

**Claims**

1. A pressure- or differential pressure measuring device comprising a central component (1) which is provided with membranes at its end sides and which contains a pressure sensor device (22), characterised in that in the peripheral zone between the membranes (15, 17; 16, 18) the central component (1) contains a cup-like recess (19), that a correspondingly dimensioned carrier component (21) of the pressure sensor device (22) is inserted into the recess (19) and that the carrier component (21) is provided with a transverse bore (27) which continues into a pressure-transmitting channel (28) in the central component (1), and at its outer edges is connected to the central component (1) by means of a weld connection (29), where the position of the transverse bore and the nature of the weld connection are such that a seal is formed around the junction point of the transverse bore (27) and the pressure transmitting channel (28) as a result of the weld connection (29).

2. A measuring device as claimed in claim 1, characterised in that the weld connection (29) is an electron beam weld connection.

**Revendications**

1. Appareil de mesure de la pression ou d'une différence de pression, comprenant une pièce centrale (1) comportant des membranes sur ses côtés frontaux et contenant un dispositif à détecteur de pression (22), caractérisé en ce que la pièce centrale (1) comporte dans la région du pourtour comprise entre les membranes (15, 17; 16, 18) un évidement (19) en forme de pot; en ce qu'une pièce-suport (21) de dimension adéquate portant le dispositif détecteur de pression (22) est introduite dans l'évidement (19) et en ce que la pièce-support (21) comporte un perçage transversal (27), débouchant dans un canal (28) de transmission de la pression ménagé dans la pièce centrale (1), en une position telle et est reliée par son bord extérieur à la pièce centrale (1) par un joint soudé (29) de façon telle que le joint soudé (29) crée une étanchéité dans la région du point de transition entre le perçage transversal (27) et le canal de transmission de la pression (28).

2. Appareil de mesure suivant la revendication 1, caractérisé en ce que le joint soudé (29) est un joint soudé obtenu par un faisceau d'électrons.

0 157 726

FIG.1

FIG.2